# EUROPEAN PATENT SPECIFICATION

(11) **EP 4 271 637 B1**
(45) Date of publication and mention of the grant of the patent: **04.12.2024**
(21) Application number: 20838591.4
(22) Date of filing: 31.12.2020
(51) Int. Cl.: B66B 1/24

(54) **A METHOD AND AN APPARATUS FOR ALLOCATING AN ELEVATOR**
VERFAHREN UND VORRICHTUNG ZUR ZUWEISUNG EINES AUFZUGS
PROCÉDÉ ET APPAREIL D'ATTRIBUTION D'UN ASCENSEUR

(43) Date of publication of application: 08.11.2023
(73) Proprietor: KONE Corporation, 00330 Helsinki (FI)
(72) Inventor: BELOV, Mika, 00330 Helsinki (FI); KATTAINEN, Ari, 00330 Helsinki (FI); SILVENNOINEN, Henry, 00330 Helsinki (FI)
(74) Representative: Papula Oy
(86) International application number: PCT/FI2020/050880
(87) International publication number: WO 2022/144487

(56) References cited:
- JP-A- 2013 216 408
- JP-A- S5 957 870

## Description

An elevator call is usually made when a passenger arrives at an elevator lobby and presses a landing call button or makes a destination call. It may also be possible to make an elevator call, for example, a destination call, beforehand before arriving to close proximity of the elevator.

In addition to people, elevators can be used to carry various autonomously operated vehicles that may autonomously navigate within a building. A control system may be associated with these autonomously operated vehicles. In order to enable the autonomously operated vehicles to utilize elevators of an elevator system, an integration between the control system and the elevator system may need to be implemented. This can be a laborious task and may unnecessarily complicate the operation of the elevator system. Thus, an alternative solution for enabling the autonomously operated vehicles to utilize the elevators of the elevator system would be desirable. JP 2013 216408 A discloses an apparatus according to the preamble of claim 6.

### SUMMARY

According to a first aspect, there is provided a method according to claim 1.

In an implementation form of the first aspect, the parameter data comprises at least one of a size and moving speed of the automated guided vehicle.

In an implementation form of the first aspect, obtaining the information indicating a destination floor for the automated guided vehicle based on the image data comprises obtaining the information indicating the destination floor for the automated guided vehicle by recognizing, based on the image data, the information indicating the destination floor from a display of the automated guided vehicle.

In an implementation form of the first aspect, causing transmission of information identifying the allocated elevator car to the automated guided vehicle comprises causing transmission of the information identifying the allocated elevator car to the automated guided vehicle using a display associated with the elevator system.

In an implementation form of the first aspect, obtaining image data associated with an area associated with a plurality of elevators comprises obtaining the image data from at least one camera.

According to a second aspect, there is provided an apparatus according to claim 6.

In an implementation form of the second aspect, the parameter data comprises at least one of a size and moving speed of the automated guided vehicle.

In an implementation form of the second aspect, the means for obtaining the information indicating a destination floor for the automated guided vehicle based on the image data are configured to obtain the information indicating the destination floor for the automated guided vehicle by recognizing, based on the image data, the information indicating the destination floor from a display of the automated guided vehicle.

In an implementation form of the second aspect, the means for causing transmission of information identifying the allocated elevator car to the automated guided vehicle are configured to cause transmission of the information identifying the allocated elevator car to the automated guided vehicle using a display associated with the elevator system.

In an implementation form of the second aspect, the means for obtaining image data associated with an area associated with a plurality of elevators are configured to obtain the image data from at least one camera.

According to a third aspect, there is provided an elevator system comprising a plurality of elevators and the apparatus of the second aspect.

In an implementation form of the third aspect, the elevator system further comprises at least one camera configured to provide the image data about the area associated with the plurality of elevators.

According to a fourth aspect, there is provided a computer program comprising program code, which when executed by at least one processing unit, causes the apparatus of the second aspect to perform the method of the first aspect.

According to a fifth aspect, there is provided a computer-readable medium comprising a computer program comprising program code which when executed by at least one processing unit, causes the apparatus of the second aspect to perform the method of the first aspect.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1** illustrates a flow chart of a method for allocating an elevator according to an example embodiment.
**FIG. 2A** illustrates elevator system elements associated with an elevator car allocation according to an example embodiment.
**FIG. 2B** illustrates elevator system elements associated with an elevator car allocation according to an example embodiment.
**FIG. 3** illustrates a block diagram of an apparatus for allocating an elevator according to an example embodiment.

### DETAILED DESCRIPTION

The following description illustrates example embodiments for allocating an elevator of an elevator system for an automated guided vehicle. The example embodiments illustrate a solution by which the allocation can be implemented without making an integration between a control system of the automated guided vehicle and the elevator system.

The term "automated guided vehicle" may refer to movable, driverless item that follows along marked long lines or wires on the floor, or uses radio waves, vision cameras, magnets, or lasers for navigation. In an example embodiment, the automated guided vehicle may be a fully autonomously operating vehicle. In another example embodiment, some operations of the automated guided vehicle may be handled by a human controller.

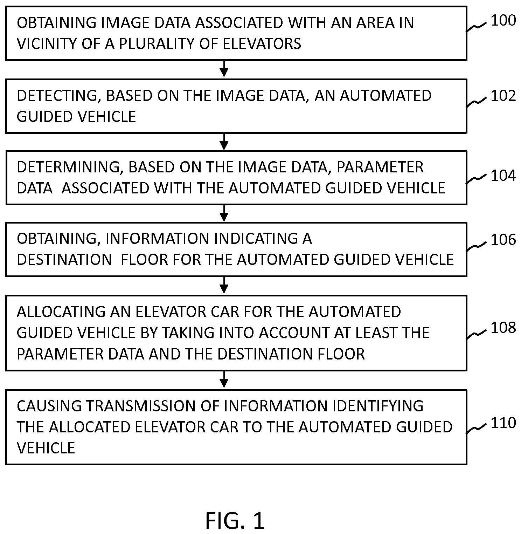

FIG. 1 illustrates a flow chart of a method for allocating an elevator according to an example embodiment.

At 100 image data associated with an area associated with a plurality of elevators is obtained. The area associated with a plurality of elevators may refer, for example, to an elevator lobby or other area in vicinity of the elevators. The image data may originate from one or more cameras associated with the elevator system. Alternatively, the image data may originate from a camera system that is external to the elevator system.

At 102 an automated guided vehicle is detected based on the image data. The detection may be based, for example, on image recognition based on the image data. The automated guided vehicle may have a shape that is detected and recognized, or some identifying feature associated with the automated guided vehicle may be identified based on the image data, for example, based on an identifier appearing on the automated guided vehicle, for example, a QR code.

At 104 parameter data associated with the automated guided vehicle is determined based on the image data. The parameter data may comprise, for example, a size and moving speed of the automated guided vehicle. In an example embodiment, the size of the automated guided vehicle may be determined directly from the image data. In another example embodiment, the parameter data may be obtained based, for example, on the identifier appearing on the automated guided vehicle.

At 106 information indicating a destination floor for the automated guided vehicle is obtained.

The information indicating the destination floor for the automated guided vehicle is obtained based on the image data. For example, the automated guided vehicle may comprise a display, and information displayed on the display may be determined by one or more cameras. The destination floor may be indicated on the display in a textual form, for example, "To floor 8". Alternatively or additionally, frequency of the display may be modulated so that it is possible to determine the destination based on the modulation. At 108 an elevator car is allocated for the automated guided vehicle by taking into account at least the parameter data and the destination floor. The elevators in the elevator system may have different sizes and only some of the elevators may be able to accommodate the automated guided vehicle. Thus, if the parameter data comprises the size of the automated guided vehicle, the elevator system is able to determine which one or ones of the elevators is/are big enough to accommodate the automated guided vehicle. In another example embodiment, if the parameter data comprises, for example, a moving speed of the automated guided vehicle, the elevator system may be able to determine how long it takes for the automated guided vehicle to reach the elevators, and thus take also this into account when allocating the elevator car.

At 110 information identifying the allocated elevator car is caused to be transmitted to the automated guided vehicle. In an example embodiment, the information may be provided to the automated guided vehicle by at least one display associated with the elevator system. As the automated guided vehicle may be equipped with a machine vision system, it is able to detect the information provided by the at least one display. The display may display, for example, "AGV Elevator D to Floor 8". In another example embodiment, an audible indication about the elevator allocation may be provided to the automated guided vehicle. Yet in another example embodiment, the information identifying the allocated elevator car may be transmitted to the automated guided vehicle by using a radio frequency transmission.

In an example embodiment, the steps discussed above may be performed by at least one apparatus or controller associated with an elevator system, for example, an elevator controller.

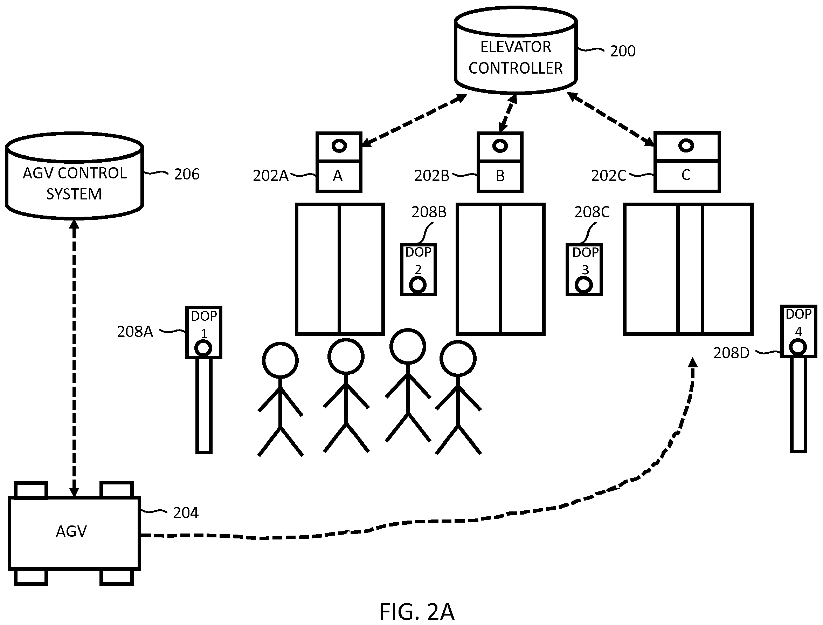

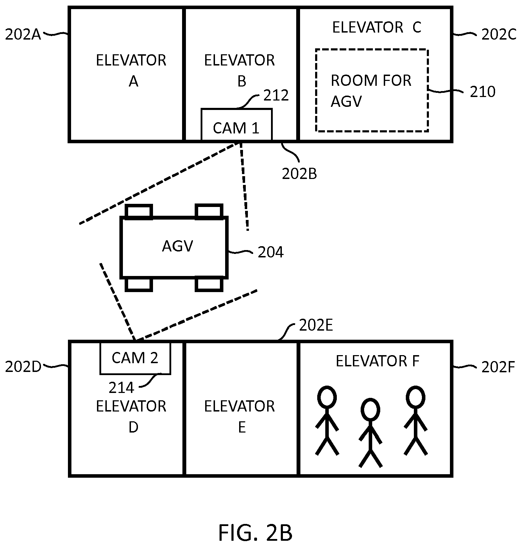

FIGS. 2A and 2B illustrate elevator system elements associated with an elevator car allocation according to an example embodiment. One or more of the elevator system elements may implement the method discussed earlier relating to FIG. 1, for example, an elevator controller 200 or another controller connected to the elevator controller 200.

An automated guided vehicle 204 may be used to carry objects or articles and deliver them to intended recipients. The course taken by the automated guided vehicle 204 may necessitate the use of one or more elevators before reaching the intended recipient. The automated guided vehicle 204 may have a control connection to a control system 206, but at the same time, it may be equipped with abilities to autonomously navigate to a set destination. The abilities may comprise, for example, machine vision capabilities, radars, sound analysis capabilities etc.

When the automated guided vehicle 204 approaches elevators 202A-202F, there may be arranged means for making a destination call, for example, using destination operating panels (DOP) 208A-208D. However, the automated guided vehicle 204 may not have abilities to connect to a destination operating panel, and other means for enabling a destination call to be made associated with the automated guided vehicle may need to be implemented. Further, in an example embodiment, not all of the elevators 202A-202F may be capable of transporting the automated guided vehicle 204.

Thus, as illustrated in FIG. 2B, one or more cameras 212, 214 may be arranged, for example, in vicinity of the elevators 202A-202F. The cameras 212, 214 may be internal elements of the elevator system, or alternatively, they may be part of a camera system connected to the elevator system. FIG. 2B illustrates an example in which the cameras 212, 214 may be associated with elevators 202B, 202D. They can be integrated, for example, with a landing display above the landing doors. In another example, a camera may be integrated into one or more destination operating panels 208A-208D. Further, one or more cameras may be standalone cameras positioned into appropriate locations in an elevator lobby. Further, even if FIG. 2B may illustrate that the cameras 212, 214 are arranged in close proximity of the landing doors associated with the elevators, one or more cameras may be arranged farther away from the elevators so that the automated guided vehicle 204 may be detected already earlier.

When multiple cameras 212, 214 are used, it enables providing a more accurate determination relating to one or more parameters associated with the automated guided vehicle. For example, the size of the automated guided vehicle may be accurately determined based on the image data obtained from the cameras 212, 214. Further, the moving speed of the automated guided vehicle 204 may be determined based on the image data.

When the automated guided vehicle 204 can be detected by the cameras 212, 214, information indicating a destination floor for the automated guided vehicle 204 is obtained. The information indicating the destination floor for the automated guided vehicle 204 is obtained based on the image data. For example, the automated guided vehicle 204 may comprise a display, and information displayed on the display may be detected by one or more of the cameras 212, 214. The destination floor may be indicated on the display in a textual form, for example, "To floor 8". Alternatively or additionally, frequency of the display may be modulated so that it is possible to determine the destination based on the modulation based on the image data obtained from the cameras 212, 214.

When the destination floor has been identified, an elevator car is allocated by the elevator controller 202 for the automated guided vehicle 204 by taking into account at least the parameter data and the destination floor. In FIG. 2B, there are two elevator 202C, 202F within which the automated guided vehicle 204 would fit to be transported to a destination floor. The elevators 202A, 202B, 202D and 202E cannot be considered for the allocation as they are too small for the automated guided vehicle 204. The elevator 202F is already occupied by a group of people and thus cannot be selected. Thus, the elevator 202C is allocated for the destination call as it has room 210 available for the automated guided vehicle 204.

Further, in another example embodiment, if the parameter data comprises, for example, moving speed of the automated guided vehicle, the elevator system may be able to determine how long it takes for the automated guided vehicle to reach the elevators, and thus take also this into account when allocating the elevator car.

Information identifying the allocated elevator car is to be delivered to the automated guided vehicle 204 so that it can be transported to the destination floor. In an example embodiment, the information may be provided to the automated guided vehicle 204 by at least one display associated with the elevator system. As the automated guided vehicle 204 may be equipped with a machine vision system, it is able to detect the information provided by the at least one display. The display may display, for example, "AGV Elevator D to Floor 8". A display arranged above the door of the serving elevator may provide the information. Alternatively or additionally, any other display arranged in the elevator lobby may provide the information. Alternatively or additionally, frequency of the display may be modulated so that the automated guided vehicle 204 is able to determine the allocated elevator based on the modulation. Yet in another example embodiment, the elevator system may comprise a speaker that is configured to provide an audible indication about the elevator allocation to the automated guided vehicle 204.

In an example embodiment of FIGS. 2A and 2B, a separate display or a display already used for another purpose, for example, a display of a destination operating panel, may be used for providing information used by the autonomous guided vehicle. For example, the display may display a code, for example, a QR code or an image which the automated guided vehicle can later use for making the destination call. For example, there can be separate floor maps for people and for automated guided vehicles. The display may display an automated guided vehicle related floor map after identifying the automated guided vehicle. In another example embodiment, the automated guided vehicle may request the floor map using a predetermined identifier or an image. The identifier or image may also identify a common language between the automated guided vehicle and the elevator controller. In this way, the automated guided vehicle and the elevator controller may agree on the format used to transfer information between the automated guided vehicle and the elevator controller. After requesting the floor map, the automated guided vehicle may be provided the floor map from which the automated guided vehicle may be able to identify a desired destination floor and read a code or an image associated with the destination floor so that the automated guided vehicle is able to later make/activate the destination call with the code or image.

In an example embodiment of FIGS. 2A and 2B, the automated guided vehicle may visit a specific location at a building, for example, at a reception type location to obtain a service label for the elevator system. The service label may include as built-in information the destination floor for the automated guided vehicle. In an example embodiment, a simple form of a service label is a queuing/running number or a QR code to which the destination floor has been associated with in the elevator system. Then, when the automated guided vehicle wishes to make the actual destination call, the automated guided vehicle may activate the destination call with the service label in the elevator lobby, for example, by displaying the service label on the display of the automated guided vehicle or by using some other means for transmitting the service label to the elevator system.

In an example embodiment of FIGS. 2A and 2B, the automated guided vehicle may be provided with an invitation, for example, from a tenant or some other building occupant. The invitation may be, for example, a code (for example, a QR code) or an image which can understood by the elevator system. Again, the invitation may comprise as built-in information the destination floor for the automated guided vehicle. Then, when the automated guided vehicle wishes to make the actual destination call, the automated guided vehicle may activate the destination call with the invitation in the elevator lobby, for example, by displaying the invitation on the display of the automated guided vehicle or by using some other means for transmitting the invitation to the elevator system.

In an example embodiment of FIGS. 2A and 2B, when it is identified based on the image data provided by the cameras that the automated guided vehicle resides in the elevator lobby area, the elevator controller or some other controller of the elevator system may start tracking whether the display of the automated guided vehicle identifies a request or an identifier for the elevator system. The request or identifier may also identify a common information transfer format between the automated guided vehicle and the elevator system.

In an example embodiment of FIGS. 2A and 2B, when it is identified based on the image data provided by the cameras that the automated guided vehicle resides in the elevator lobby area, the elevator controller or some other controller of the elevator system may activate short-range signaling, for example, near field communication (NFC) signaling or other short range wireless signaling to be used between the automated guided vehicle and the elevator system. The short-range signaling could then be used to direct the automated guided vehicle towards the allocated elevator.

In an example embodiment of FIGS. 2A and 2B, when it is identified based on the image data provided by the cameras that the automated guided vehicle resides in the elevator lobby area, the elevator controller or some other controller of the elevator system may control one or more display in the elevator lobby to display guidance information for the automated guided vehicle to reach the allocated elevator.

At least some of the above discussed embodiments may enable an identification of a destination call from an automated guided vehicle and an identification of an allocated elevator to the automated guided vehicle in a simple manner without having to implement an expensive and complicated system integration between the control system of the automated guided vehicle and the elevator system.

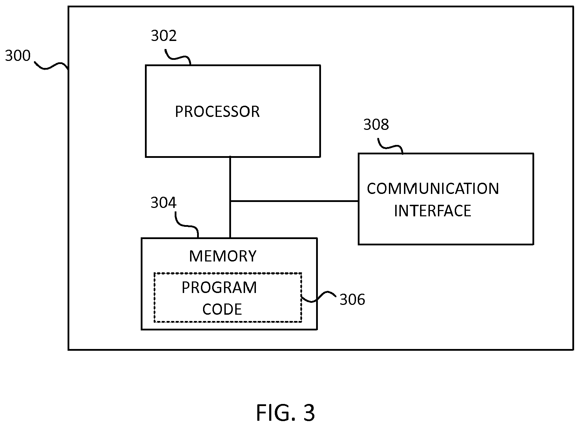

FIG. 3 illustrates an apparatus 300 for allocating an elevator according to an example embodiment. The apparatus 300 may comprise at least one processor 302. The apparatus 300 may further comprise at least one memory 304. The memory 304 may comprise program code 306 which, when executed by the processor 302 causes the apparatus 300 to perform at least one example embodiment. The exemplary embodiments and aspects of the subject-matter can be included within any suitable device, for example, including, servers, elevator controllers, workstations, capable of performing the processes of the exemplary embodiments. The exemplary embodiments may also store information relating to various processes described herein. Although the apparatus 300 is illustrated as a single device it is appreciated that, wherever applicable, functions of the apparatus 300 may be distributed to a plurality of devices.

Example embodiments may be implemented in software, hardware, application logic or a combination of software, hardware and application logic. The example embodiments can store information relating to various methods described herein. This information can be stored in one or more memories 304, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

The processor 302 may comprise one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments may be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like.

As stated above, the components of the example embodiments may include computer readable medium or memories 304 for holding instructions programmed according to the teachings and for holding data structures, tables, records, and/or other data described herein. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

The apparatus 300 may comprise a communication interface 308 configured to enable the apparatus 300 to transmit and/or receive information, to/from other apparatuses and/or elements associated with an elevator system.

The apparatus 300 may comprise means for performing at least one method described herein. In one example, the means may comprise the at least one processor 302, the at least one memory 304 including program code 306 configured to, when executed by the at least one processor 302, cause the controller 300 to perform the method.

## Claims

1. A method for allocating an elevator car of an elevator system, the method comprising:
obtaining image data associated with an area associated with a plurality of elevators (202A-202F);
detecting, based on the image data, an automated guided vehicle (204);
determining, based on the image data, parameter data associated with the automated guided vehicle (204);
obtaining information indicating a destination floor for the automated guided vehicle (204) based on the image data;
allocating an elevator car for the automated guided vehicle (204) by taking into account at least the parameter data and the destination floor; and
causing transmission of information identifying the allocated elevator car to the automated guided vehicle (204).

2. The method of claim 1, wherein the parameter data comprises at least one of a size and moving speed of the automated guided vehicle (204).

3. The method of claim 1 or 2, wherein obtaining the information indicating a destination floor for the automated guided vehicle (204) based on the image data comprises:
obtaining the information indicating the destination floor for the automated guided vehicle (204) by recognizing, based on the image data, the information indicating the destination floor from a display of the automated guided vehicle (204).

4. The method of any of claims 1 - 3, wherein causing transmission of information identifying the allocated elevator car to the automated guided vehicle (204) comprises:
causing transmission of the information identifying the allocated elevator car to the automated guided vehicle (204) using a display associated with the elevator system.

5. The method of any of claims 1 - 4, wherein obtaining image data associated with an area associated with a plurality of elevators (202A-202F) comprises:
obtaining the image data from at least one camera (212, 214).

6. An apparatus (300) for allocating an elevator car of an elevator system, the apparatus (300) comprising:
means (302, 304, 308) for obtaining image data associated with an area associated with a plurality of elevators (202A-202F);
means (302, 304, 308) for detecting, based on the image data, an automated guided vehicle (204);
means (302, 304, 308) for determining, based on the image data, parameter data associated with the automated guided vehicle (204); **characterized by** further comprising
means (302, 304, 308) for obtaining, information indicating a destination floor for the automated guided vehicle (204) based on the image data;
means (302, 304, 308) for allocating an elevator car for the automated guided vehicle (204) by taking into account at least the parameter data and the destination floor; and
means (302, 304, 308) for causing transmission of information identifying the allocated elevator car to the automated guided vehicle (204).

7. The apparatus (300) of claim 6, wherein the parameter data comprises at least one of a size and moving speed of the automated guided vehicle (204).

8. The apparatus (300) of claim 6 or 7, wherein the means (302, 304, 308) for obtaining the information indicating a destination floor for the automated guided vehicle (204) based on the image data are configured to obtain the information indicating the destination floor for the automated guided vehicle (204) by recognizing, based on the image data, the information indicating the destination floor from a display of the automated guided vehicle (204).

9. The apparatus (300) of any of claims 6 - 8, wherein the means (302, 304, 308) for causing transmission of information identifying the allocated elevator car to the automated guided vehicle (204) are configured to cause transmission of the information identifying the allocated elevator car to the automated guided vehicle (204) using a display associated with the elevator system.

10. The apparatus (300) of any of claims 6 - 9, wherein the means (302, 304, 308) for obtaining image data associated with an area associated with a plurality of elevators are configured to obtain the image data from at least one camera (212, 214).

11. An elevator system comprising:
a plurality of elevators (202A-202F); and
the apparatus (300) of any of claims 6 - 10.

12. The elevator system of claim 11, further comprising at least one camera (212, 214) configured to provide the image data about the area associated with the plurality of elevators (202A-202F).

13. A computer program comprising program code, which when executed by at least one processing unit, causes the apparatus (300) of any of claims 6 - 10 to perform the method of any of claims 1 - 5.

14. A computer-readable medium comprising a computer program comprising program code, which when executed by at least one processing unit, causes the apparatus (300) of any of claims 6 - 10 to perform the method of any of claims 1 - 5.

## Patentansprüche

1. Verfahren zur Zuweisung einer Aufzugskabine eines Aufzugssystems, wobei das Verfahren umfasst:
Erhalten von Bilddaten, die einem Bereich zugeordnet sind, der mit einer Mehrzahl von Aufzügen (202A-202F) verbunden ist;
Erfassen eines fahrerlosen Transportmittels (204) auf der Grundlage der Bilddaten;
Ermitteln von Parameterdaten, die mit dem fahrerlosen Transportmittel (204) verbunden sind, auf der Grundlage der Bilddaten;
Erhalten einer Information, die eine Zieletage für das fahrerlose Transportmittel (204) angibt, auf der Grundlage der Bilddaten;
Zuweisen einer Aufzugskabine für das fahrerlose Transportmittel (204) unter Berücksichtigung zumindest der Parameterdaten und der Zieletage und
Veranlassen der Übertragung einer Information zur Identifizierung der zugewiesenen Aufzugskabine an das fahrerlose Transportmittel (204).

2. Verfahren nach Anspruch 1, wobei die Parameterdaten mindestens eine der Größe und der Fahrgeschwindigkeit des fahrerlosen Transportmittels (204) umfassen.

3. Verfahren nach Anspruch 1 oder 2, wobei das Erhalten der Information, die eine Zieletage für das fahrerlose Transportmittel (204) angibt, auf der Grundlage der Bilddaten umfasst:
Erhalten der Information, die die Zieletage für das fahrerlose Transportmittel (204) angibt, durch Erkennen der Information, die die Zieletage angibt, von einer Anzeige des fahrerlosen Transportmittels (204), auf der Grundlage der Bilddaten.

4. Verfahren nach einem der Ansprüche 1 bis 3, wobei das Veranlassen der Übertragung einer Information zur Identifizierung der zugewiesenen Aufzugskabine an das fahrerlose Transportmittel (204) umfasst:
Veranlassen der Übertragung der Information zur Identifizierung der zugewiesenen Aufzugskabine an das fahrerlose Transportmittel (204) unter Verwendung einer mit dem Aufzugssystem verbundenen Anzeige.

5. Verfahren nach einem der Ansprüche 1 bis 4, wobei das Erhalten von Bilddaten, die einem Bereich zugeordnet sind, der mit einer Mehrzahl von Aufzügen (202A-202F) verbunden ist, umfasst:
Erhalten der Bilddaten von mindestens einer Kamera (212, 214).

6. Eine Vorrichtung (300) zur Zuweisung einer Aufzugskabine eines Aufzugssystems, wobei die Vorrichtung (300) umfasst:
Mittel (302, 304, 308) zum Erhalten von Bilddaten, die einem Bereich zugeordnet sind, der mit einer Mehrzahl von Aufzügen (202A-202F) verbunden ist;
Mittel (302, 304, 308) zum Erfassen eines fahrerlosen Transportmittels (204) auf der Grundlage der Bilddaten;
Mittel (302, 304, 308) zum Ermitteln von Parameterdaten, die mit dem fahrerlosen Transportmittel (204) verbunden sind, auf der Grundlage der Bilddaten; **dadurch gekennzeichnet, dass** sie ferner umfasst:
Mittel (302, 304, 308) zum Erhalten einer Information, die eine Zieletage für das fahrerlose Transportmittel (204) angibt, auf der Grundlage der Bilddaten;
Mittel (302, 304, 308) zum Zuweisen einer Aufzugskabine für das fahrerlose Transportmittel (204) unter Berücksichtigung zumindest der Parameterdaten und der Zieletage und
Mittel (302, 304, 308) zum Veranlassen der Übertragung einer Information zur Identifizierung der zugewiesenen Aufzugskabine an das fahrerlose Transportmittel (204).

7. Vorrichtung (300) nach Anspruch 6, wobei die Parameterdaten mindestens eine der Größe und der Fahrgeschwindigkeit des fahrerlosen Transportmittels (204) umfassen.

8. Vorrichtung (300) nach Anspruch 6 oder 7, wobei die Mittel (302, 304, 308) zum Erhalten der Information, die eine Zieletage für das fahrerlose Transportmittel (204) angibt, auf der Grundlage der Bilddaten dazu eingerichtet sind, die Information, die die Zieletage für das fahrerlose Transportmittel (204) angibt, durch Erkennen der Information, die die Zieletage angibt, auf der Grundlage der Bilddaten von einer Anzeige des fahrerlosen Transportmittels (204) zu erhalten.

9. Vorrichtung (300) nach einem der Ansprüche 6 bis 8, wobei die Mittel (302, 304, 308) zum Veranlassen der Übertragung einer Information zur Identifizierung der zugewiesenen Aufzugskabine an das fahrerlose Transportmittel (204) dazu eingerichtet sind, die Übertragung der Information zur Identifizierung der zugewiesenen Aufzugskabine an das fahrerlose Transportmittel (204) unter Verwendung einer mit dem Aufzugssystem verbundenen Anzeige zu veranlassen.

10. Vorrichtung (300) nach einem der Ansprüche 6 bis 9, wobei die Mittel (302, 304, 308) zum Erhalten von Bilddaten, die einem Bereich zugeordnet sind, der mit einer Mehrzahl von Aufzügen verbunden ist, dazu eingerichtet sind, die Bilddaten von mindestens einer Kamera (212, 214) zu erhalten.

11. Ein Aufzugssystem, umfassend:
eine Mehrzahl von Aufzügen (202A-202F) und
die Vorrichtung (300) nach einem der Ansprüche 6 bis 10.

12. Aufzugssystem nach Anspruch 11, ferner umfassend mindestens eine Kamera (212, 214), die dazu eingerichtet ist, die Bilddaten über den mit der Mehrzahl von Aufzügen (202A-202F) verbundenen Bereich bereitzustellen.

13. Computerprogramm mit einem Programmcode, der bei Ausführung durch mindestens eine Verarbeitungseinheit die Vorrichtung (300) nach einem der Ansprüche 6 bis 10 veranlasst, das Verfahren nach einem der Ansprüche 1 bis 5 durchzuführen.

14. Computerlesbares Medium umfassend ein Computerprogramm mit einem Programmcode, der bei Ausführung durch mindestens eine Verarbeitungseinheit die Vorrichtung (300) nach einem der Ansprüche 6 bis 10 veranlasst, das Verfahren nach einem der Ansprüche 1 bis 5 durchzuführen.

## Revendications

1. Procédé destiné à attribuer une cabine d'ascenseur à un système d'ascenseur, le procédé comprenant :
obtenir des données d'images associées à une zone associée à une pluralité d'ascenseurs (202A-202F) ;
détecter, sur la base des données d'images, un véhicule à guidage automatique (204) ;
déterminer, sur la base des données d'images, des données de paramètres associées au véhicule à guidage automatique (204) ;
obtenir des informations indiquant un étage de destination pour le véhicule à guidage automatique (204) sur la base des données d'images ;
attribuer une cabine d'ascenseur pour le véhicule à guidage automatique (204) en prenant en compte au moins les données de paramètres et l'étage de destination ; et
provoquer une transmission d'informations identifiant la cabine d'ascenseur attribuée au véhicule à guidage automatique (204).

2. Procédé selon la revendication 1, dans lequel les données de paramètres comprennent au moins une donnée parmi une taille et une vitesse de déplacement du véhicule à guidage automatique (204).

3. Procédé selon la revendication 1 ou la revendication 2, dans lequel le fait d'obtenir les informations indiquant un étage de destination pour le véhicule à guidage automatique (204) sur la base des données d'images comprend :
obtenir les informations indiquant l'étage de destination pour le véhicule à guidage automatique (204) en reconnaissant, sur la base des données d'images, les informations indiquant l'étage de destination à partir d'un affichage du véhicule à guidage automatique (204).

4. Procédé selon l'une quelconque des revendications 1 à 3, dans lequel le fait de provoquer une transmission d'informations identifiant la cabine d'ascenseur attribuée au véhicule à guidage automatique (204) comprend :
provoquer une transmission des informations identifiant la cabine d'ascenseur attribuée au véhicule à guidage automatique (204) en utilisant un affichage associé au système d'ascenseur.

5. Procédé selon l'une quelconque des revendications 1 à 4, dans lequel le fait d'obtenir des données d'images associées à une zone associée à une pluralité d'ascenseurs (202A-202F) comprend : obtenir les données d'images à partir d'au moins une caméra (212, 214).

6. Appareil (300) destiné à attribuer une cabine d'ascenseur d'un système d'ascenseur, l'appareil (300) comprenant :
un moyen (302, 304, 308) destiné à obtenir des données d'images associées à une zone associée à une pluralité d'ascenseurs (202A-202F) ;
un moyen (302, 304, 308) destiné à détecter, sur la base des données d'images, un véhicule à guidage automatique (204) ;
un moyen (302, 304, 308) destiné à déterminer, sur la base des données d'images, des données de paramètres associées au véhicule à guidage automatique (204) ; **caractérisé en ce qu'**il comprend en outre
un moyen (302, 304, 308) destiné à obtenir des informations indiquant un étage de destination pour le véhicule à guidage automatique (204) sur la base des données d'images ;
un moyen (302, 304, 308) destiné à attribuer une cabine d'ascenseur pour le véhicule à guidage automatique (204) en prenant en compte au moins les données de paramètres et l'étage de destination ; et
un moyen (302, 304, 308) destiné à provoquer une transmission d'informations identifiant la cabine d'ascenseur attribuée au véhicule à guidage automatique (204).

7. Appareil (300) selon la revendication 6, dans lequel les données de paramètres comprennent au moins une donnée parmi une taille et une vitesse de déplacement du véhicule à guidage automatique (204).

8. Appareil (300) selon la revendication 6 ou la revendication 7, dans lequel le moyen (302, 304, 308) destiné à obtenir les informations indiquant un étage de destination pour le véhicule à guidage automatique (204) sur la base des données d'images est configuré pour obtenir les informations indiquant l'étage de destination pour le véhicule à guidage automatique (204) en reconnaissant, sur la base des données d'images, les informations indiquant l'étage de destination à partir d'un affichage du véhicule à guidage automatique (204).

9. Appareil (300) selon l'une quelconque des revendications 6 à 8, dans lequel le moyen (302, 304, 308) destiné à provoquer une transmission d'informations identifiant la cabine d'ascenseur attribuée au véhicule à guidage automatique (204) est configuré pour provoquer une transmission des informations identifiant la cabine d'ascenseur attribuée au véhicule à guidage automatique (204) en utilisant un affichage associé au système d'ascenseur.

10. Appareil (300) selon l'une quelconque des revendications 6 à 9, dans lequel le moyen (302, 304, 308) destiné à obtenir des données d'images associées à une zone associée à une pluralité d'ascenseurs est configuré pour obtenir les données d'images à partir d'au moins une caméra (212, 214).

11. Système d'ascenseur comprenant :
une pluralité d'ascenseurs (202A-202F) ; et
l'appareil (300) selon l'une quelconque des revendications 6 à 10.

12. Système d'ascenseur selon la revendication 11, comprenant en outre au moins une caméra (212, 214) configurée pour fournir les données d'images relatives à la zone associée à la pluralité d'ascenseurs (202A-202F).

13. Programme d'ordinateur comprenant un code de programme qui, lorsqu'exécuté par au moins une unité de traitement, amène l'appareil (300) selon l'une quelconque des revendications 6 à 10 à mettre en oeuvre le procédé selon l'une quelconque des revendications 1 à 5.

14. Support lisible par ordinateur comprenant un programme d'ordinateur comprenant un code de programme qui, lorsqu'exécuté par au moins une unité de traitement, amène l'appareil (300) selon l'une quelconque des revendications 6 à 10 à mettre en oeuvre le procédé selon l'une quelconque des revendications 1 à 5.
